(19) Europäisches Patentamt
European Patent Office
Office européen des brevets

(11) **EP 2 655 980 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **11804681.2**

(22) Anmeldetag: **21.12.2011**

(51) Int Cl.:
*G05D 23/19* (2006.01)      *F24D 12/02* (2006.01)
*F24D 19/10* (2006.01)

(86) Internationale Anmeldenummer:
**PCT/EP2011/073617**

(87) Internationale Veröffentlichungsnummer:
**WO 2012/085103 (28.06.2012 Gazette 2012/26)**

(54) **VERFAHREN ZUR OPTIMIERTEN EINSTELLUNG EINER HEIZUNGSREGELUNG EINES HEIZUNGS- UND GEGEBENFALLS WARMWASSERBEREITUNGSSYSTEMS SOWIE HEIZUNGS- UND GEGEBENFALLS WARMWASSERBEREITUNGSSYSTEM**

METHOD FOR THE OPTIMIZED ADJUSTMENT OF A HEATING CONTROL OF A HEATING SYSTEM AND POSSIBLY HOT-WATER PREPARING SYSTEM, AND A HEATING SYSTEM AND POSSIBLY HOT-WATER PREPARING SYSTEM

PROCÉDÉ DE RÉGLAGE OPTIMISÉ D'UNE RÉGULATION DE CHAUFFAGE D'UN SYSTÈME DE CHAUFFAGE ET EVENTUELLEMENT DE PRODUCTION D'EAU CHAUDE SANITAIRE, AINSI QUE SYSTÈME DE CHAUFFAGE ET EVENTUELLEMENT DE PRODUCTION D'EAU CHAUDE SANITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.12.2010 DE 102010056300**

(43) Veröffentlichungstag der Anmeldung:
**30.10.2013 Patentblatt 2013/44**

(73) Patentinhaber: **Robert Bosch GmbH
70442 Stuttgart (DE)**

(72) Erfinder: **STUMPP, Hermann
73730 Esslingen (DE)**

(56) Entgegenhaltungen:
**EP-A1- 0 108 699      EP-A1- 2 159 495
WO-A1-2007/046792      FR-A1- 2 501 837**

EP 2 655 980 B1

**Beschreibung**

Die vorliegende Erfindung betrifft ein Verfahren zur optimierten Einstellung einer Heizungsregelung eines Heizungs- und gegebenfalls Warmwasserbereitungssystems sowie ein derartiges Heizungs- und gegebenfalls Warmwasserbereitungssystem.

Grundsätzlich ist es bekannt, dass Heizungs- und gegebenfalls Warmwasserbereitungssystem mit mehr als einem Wärmeerzeuger zur Erzeugung von Wärme versehen sind. Auch ist es bekannt, solche Wärmeerzeuger in einem Heizsystem in Serie zu schalten, sodass ein erster Wärmeerzeuger eine Ersterwärmung bzw. Vorwärmung eines Heizmediums und der zweite Wärmeerzeuger die finale Erwärmung auf eine Solltemperatur durchführt. Mit anderen Worten erzeugt eine solche Serienschaltung eine Situation, in welcher der Vorlauf des ersten Wärmeerzeugers in fluidkommunizierender Verbindung mit dem Rücklauf des zweiten Wärmeerzeugers steht. Der Vorlauf des zweiten Wärmeerzeugers bildet den Vorlauf des Heizsystems und stellt das erwärmte Heizfluid für das Heizsystem zur Verfügung. Der Rücklauf des Heizsystems gelangt in den Rücklauf des ersten Wärmeerzeugers und wird dort vorerwärmt, um über den Vorlauf wieder dem Rücklauf des zweiten Wärmeerzeugers zur Verfügung gestellt zu werden.

Die EP 2 159 495 A1 zeigt eine Regeleinheit in einem Heizsystem, welches zwei Wärmequellen aufweist, einen Boiler und eine Wärmepumpe. Die Regeleinheit ist mit einem Temperatursensor zur Messung einer Rücklauftemperatur, mit einem Temperatursensor zur Messung einer Vorlauftemperatur verbunden und mit den beiden Wärmequellen verbunden. Dabei schaltet die Regeleinheit eine oder beide Wärmequellen in Abhängigkeit der Vor- und Rücklauftemperatur aus. Die Merkmale des Oberbegriffs von Anspruch 1 bzw. von Anspruch 8 sind aus Dokument EP 2 159 495 A1 bekannt.

Nachteilig bei den bekannten Systemen ist es, dass die Vorlauftemperatur des ersten Wärmeerzeugers nicht einer optimierten Betriebsweise zumindest einer der beiden Wärmeerzeuger angepasst werden kann. Vielmehr ist bei bekannten Heizsystemen die Vorlauftemperatur des ersten Wärmeerzeugers und damit die vorgegebene Rücklauftemperatur des zweiten Wärmeerzeugers fest eingestellt, bzw. zumindest nicht rückgekoppelt mit der aktuellen Betriebssituation und die Betriebssituation beeinflussender Parameter.

Aufgabe der vorliegenden Erfindung ist es daher, die vorstehend genannten Nachteile zu beheben. Insbesondere ist es Aufgabe der vorliegenden Erfindung, ein Verfahren und ein Heizungs- und gegebenfalls Warmwasserbereitungssystem zur Verfügung zu stellen, mit dessen Hilfe die Vorlaufsolltemperatur des ersten Wärmeerzeugers in optimierter Weise eingestellt werden kann.

Voranstehende Aufgabe wird gelöst durch ein Verfahren mit den Merkmalen des unabhängigen Anspruchs 1 sowie durch ein Heizungs- und gegebenfalls Warmwasserbereitungssystem mit den Merkmalen des unabhängigen Anspruchs 8.

Bei einem erfindungsgemäßen Verfahren zur optimierten Einstellung einer Heizungsregelung eines Heizungs- und gegebenfalls Warmwasserbereitungssystems sind zwei in Serie geschaltete und regelbare Wärmeerzeuger für die Beheizung eines Raumes mittels eines Heizkreislaufes vorgesehen. Ein solches Verfahren nach der vorliegenden Erfindung weist die folgenden Schritte auf:

- Vorgeben der gewünschten Heiztemperatur für den Heizkreislauf des zu beheizenden Raumes und gegebenfalls einer Sollvorlauftemperatur für die Warmwasserbereitung,
- Vorgeben der zu optimierenden Kostenrandbedingungen der beiden Wärmeerzeuger,
- Bestimmen der Außentemperatur um den zu beheizenden Raum, wenn die Effizienz eines Wärmeerzeugers davon abhängt,
- Bestimmen der Rücklauftemperatur vom Heizkreislauf zum ersten der beiden Wärmeerzeuger,
- Auswählen einer ersten Vorlauftemperatur für den ersten Wärmeerzeuger zwischen der bestimmten Rücklauftemperatur und der gewünschten Heiztemperatur,
- Berechnen der Gesamtkosten für den Betrieb des Heizsystems mit den vorgegebenen und den bestimmten Werten,
- Iteratives Variieren der Vorlauftemperatur für den ersten Wärmeerzeuger mit jeweils anschließender Berechnung der Gesamtkosten für den Betrieb des Heizsystems mit den vorgegebenen und den bestimmten Werten,
- Vergleich aller iterativ berechneten Gesamtkosten, und
- Vorgeben der Vorlauftemperatur, die zu den geringsten berechneten Gesamtkosten geführt hat, für die Regelung des ersten Wärmeerzeugers.

Somit wird bei einem erfindungsgemäßen Verfahren eine iterative Optimierung der Vorlauftemperatur des ersten Wärmeerzeugers durchgeführt. Dabei ist für den Start dieser iterativen Optimierung grundsätzlich unerheblich, welche Vorlauftemperatur für den ersten Wärmeerzeuger gewählt wird. Vielmehr ist entscheidend, dass ein möglichst großer Bereich möglicher Vorlauftemperaturen, also im Prinzip der gesamte Bereich zwischen der Rücklauftemperatur des ersten Wärmeerzeugers und der notwendigen Vorlauftemperatur des zweiten Wärmeerzeugers, abgedeckt wird, um auch wirklich den optimalen Betriebspunkt, also die optimale Vorlauftemperatur des ersten Wärmeerzeugers ermitteln zu können. Die Optimierung kann aber auch alternativ dazu analytisch erfolgen und muss unter bestimmten Randbedingungen nicht iterativ sein, wenn eine Kostenfunktion abgeleitet werden kann.

Mit Bezug auf die Berechnung der Gesamtkosten für den Betrieb des Heizsystems ist dabei der Begriff "Gesamtkosten" wie folgt zu verstehen. Diese Gesamtkosten können durch aus unterschiedlichen Kostenparametern zusammengesetzte Kostenfunktionen abgebildet sein. So ist es beispielsweise möglich, dass die Gesamtkosten mit Bezug auf die tatsächlichen Energiekosten verwendet werden. Beispielsweise können die Preise für Strom oder fossile Brennstoffe wie Gas oder Öl verwendet werden, um die tatsächlichen Gesamtkosten beim Betrieb beider Wärmeerzeuger zu ermitteln. Eine Optimierung hinsichtlich derartiger Gesamtkosten führt also zu einem besonders kosteneffizienten Betrieb des Heizsystems. Jedoch ist es auch denkbar, dass die Gesamtkosten mit Bezug auf die Energieeffizienz, also den Einsatz der Primärenergie verwendet werden. Solche Gesamtkosten sind also energetische Kosten, die eine Verbrauchsminimierung beider Wärmeerzeuger erzielen sollen. Hier kann also von einer ökologischen Effizienz hinsichtlich Ressourcenaufwand in der Betriebsweise des Heizsystems gesprochen werden. Auch ist es möglich, dass die Gesamtkosten den $CO_2$-Ausstoß hinsichtlich der verwendeten Energien des Heizsystems betrachten. Dabei würde dann der Einfluss auf die Klimaerwärmung bewertet.

Um das iterative Variieren in vordefinierter Weise derart durchzuführen, dass immer ein gleicher Ablauf der Iteration erfolgt, kann es vorteilhaft sein, einen Mindestabstand von der bestimmten Rücklauftemperatur des ersten Wärmeerzeugers zu definieren, ab welchem die erste Vorlauftemperatur des ersten Wärmeerzeugers vorgegeben wird. Für den ersten Iterationsschritt wird somit sozusagen in der Nähe der Rücklauftemperatur des ersten Wärmeerzeugers begonnen, und anschließend die Vorlauftemperatur über den Lauf der Iteration sukzessive erhöht. Selbstverständlich ist es auch möglich, dass der Startpunkt für die Iteration bei einer maximalen Vorlauftemperatur gewählt wird, von welcher über den Lauf der Iteration die Vorlauftemperatur sukzessive verringert wird.

Auch kann es von Vorteil sein, wenn der Gradient der Veränderung der Gesamtkosten bezogen auf die einzelnen iterativen Schritte der unterschiedlichen Vorlauftemperaturen des ersten Wärmeerzeugers bestimmt wird. Genauso auch analytisch durch Ableiten. Über die Bestimmung dieses Gradienten ist es möglich, ein Extremum, insbesondere ein Minimum, des Verlaufs der Gesamtkosten über die unterschiedlichen Vorlauftemperaturen zu erkennen, bevor sämtliche möglichen Vorlauftemperaturen mit Hilfe der Iteration zu einem Gesamtkostenwert geführt haben. Auf diese Weise kann somit die Iteration zur Optimierung abgebrochen werden, sobald das erste Extremum, insbesondere das Minimum, mit Hilfe des Gradienten erkannt worden ist. Dies beinhaltet zwar das Risiko, dass es sich hierbei um ein lokales Minimum der Gesamtkostenkurve handelt, jedoch stellt auch dieses eine zumindest lokal gesehen effiziente Betriebsweise des gesamten Heizsystems dar.

Es kann von Vorteil sein, wenn bei einem erfindungsgemäßen Verfahren zwischen dem Heizkreislauf und dem ersten Wärmeerzeuger ein weiterer, passiver Wärmeerzeuger angeordnet ist. Die Rücklauftemperatur zum ersten Wärmeerzeuger wird bei einer solchen Anordnung durch die Vorlauftemperatur des passiven Wärmeerzeugers bestimmt. Dies hat den großen Vorteil, dass beim Einsatz einer solarthermischen Anlage als passiver Wärmeerzeuger keine Veränderung des erfindungsgemäßen Optimierungsverfahrens durchgeführt werden muss. Vielmehr verbleibt der Schritt der Bestimmung der Rücklauftemperatur des ersten Wärmeerzeugers gleich, ohne dass eine Anpassung hinsichtlich des passiven Wärmeerzeugers erfolgen muss. In Abhängigkeit der aktuellen Betriebsweise des passiven Wärmeerzeugers, also bei der Verwendung von Solarthermie, in Abhängigkeit von Sonneneinstrahlung oder fehlender Sonneneinstrahlung, wird sich dementsprechend die Rücklauftemperatur als Eingangsgröße für das erfindungsgemäße Verfahren ändern. Eine separate Betrachtung des passiven Wärmeerzeugers ist bei einem erfindungsgemäßen Verfahren also nicht notwendig, wodurch die Ausführung eines erfindungsgemäßen Verfahrens weiter vereinfacht wird.

Es können für ein erfindungsgemäßes Verfahren beispielsweise eine Wärmepumpe als erster Wärmeerzeuger und ein konventioneller Wärmeerzeuger, beispielsweise mit einem Gas- oder Ölbrenner, als zweiter Wärmeerzeuger verwendet werden. Selbstverständlich sind auch elektrische Zusatzheizungen oder Durchlauferhitzer als zweiter Wärmeerzeuger denkbar. Auch die Aufreihung einer Vielzahl von Wärmeerzeugern, also mehr als zwei aktiven Wärmeerzeugern in Serie, ist mit Hilfe eines erfindungsgemäßen Verfahrens auch für eine kaskadierte Optimierungsregelung denkbar.

Es kann vorteilhaft sein, wenn bei einem erfindungsgemäßen Verfahren verschiedene zu optimierende Kostenrandbedingungen in einer Tabelle vorgegeben sind und zur Vorgabe der zu optimierten Kostenrandbedingungen aus dieser Tabelle eine zu optimierende Kostenrandbedingung für das Verfahren ausgewählt wird. Mit anderen Worten ist es also möglich, sämtliche notwendigen Kostenrandbedingungen bereits in einer Regelvorrichtung vorzusehen, die das erfindungsgemäße Verfahren ausführt. Ein Verwender eines erfindungsgemäßen Verfahrens kann auf diese Weise je nach aktueller Situation eine der Kostenrandbedingungen für die Optimierung auswählen. So ist es beispielsweise für ihn möglich, für einen gewissen Zeitraum die Betriebskosten seiner Anlage auf ein Minimum zu optimieren. Der gleiche Nutzer oder ein anderer Nutzer erhält durch einfaches Verändern der Auswahl der Kostenrandbedingungen die Möglichkeit, ohne Eingriffe in das erfindungsgemäße Verfahren eine alternative Optimierung hinsichtlich anderer Kostenrandbedingungen, beispielsweise zur Reduktion des $CO_2$-Ausstoßes oder zur Reduktion des Primärenergieverbrauches, auszuwählen. Auch ist es auf diese Weise möglich, dass ein erfindungsgemäßes Verfahren für zumindest zwei Kostenrandbedingungen parallel durchgeführt wird, und vom Nutzer oder automatisch diejenige Vorlauftemperatur ausgewählt wird, welche mit Bezug auf die zugehörigen Kostenrandbedingungen prozentual das höchste Einsparpotenzial mit sich bringt. Ein Nutzer kann somit die Zielgrößen gewichten, zum Beispiel eher in Richtung auf Kosten- oder Umweltaspekte. Auf diese Weise wird aus einer Vielzahl unterschiedlicher Betrachtungsweisen, also aus einer Vielzahl unterschiedlicher Kostenrandbedingungen, die optimale Einsparung erzielt.

Weiter kann es von Vorteil sein, wenn bei einem erfindungsgemäßen Verfahren vor der Vorgabe der zu optimierenden Kostenrandbedingungen die aktuelle Ortszeit bestimmt wird und die der bestimmten Ortszeit entsprechende Kostenrandbedingung verwendet wird. Solche ortszeitabhängigen Kostenrandbedingungen sind beispielsweise dann zu beachten, wenn es sich um strombetriebene Wärmeerzeuger als ersten und/oder zweiten Wärmeerzeuger handelt. Hier ist häufig eine Unterscheidung zwischen Tagstrom und deutlich günstigerem Nachtstrom durchzuführen, da sich durch die Veränderung der Kostenrandbedingungen abhängig von der Ortszeit auch die entsprechende Optimierung verändert und sich die optimale Vorlauftemperatur des ersten Wärmeerzeugers damit verschiebt. Auch ist das erfindungsgemäße Verfahren auf Strom erzeugende Wärmeerzeuger oder damit vernetzte Systemkomponenten übertragbar. Weiterhin ist es auch bei der Nutzung anderer Energiemöglichkeiten, wie beispielsweise bei Fernwärme, häufig so, dass deren Kosten von der Nutzungszeit abhängig sind.

Das Einbinden der aktuellen Ortszeit in ein erfindungsgemäßes Optimierungsverfahren ermöglicht es also auch solche zeitabhängigen Schwankungen der Preise automatisiert zu berücksichtigen. Selbstverständlich ist es auch denkbar, dass über eine Datenverbindung ein erfindungsgemäßes Verfahren mit tagesaktuellen oder sogar stunden- oder minutenaktuellen Kostenrandbedingungen versorgt wird. Beispielsweise können solche Kostenrandbedingungen über Datenanschlüsse oder direkt aus dem Internet erhalten werden. Damit kann sichergestellt sein, dass ein Optimierungsverfahren gemäß der vorliegenden Erfindung immer mit den aktuellen Daten arbeitet und auf diese Weise in jeder Situation die aktuell kostengünstigste Vorlauftemperatur hinsichtlich der gewählten Kostenrandbedingungen auswählt.

Ein weiterer Gegenstand der vorliegenden Erfindung ist ein Heizungs- und gegebenenfalls Warmwasserbereitungssystem mit zumindest zwei in Serie geschalteten und regelbaren Wärmeerzeugern, sowie eine Regelvorrichtung, die zur Ausführung eines erfindungsgemäßen Verfahrens eingerichtet ist. Ein erfindungsgemäßes Heizsystem weist die gleichen Vorteile und Verbesserungen auf, wie sie ausführlich voran stehend zu dem erfindungsgemäßen Verfahren erläutert worden sind.

Ein erfindungsgemäßes Heizsystem kann dahingehend weiter entwickelt sein, dass die Regelvorrichtung eine Eingabeschnittstelle aufweist, über welche insbesondere ein Nutzer des Heizsystems die Kostenrandbedingungen eingeben und / oder auswählen kann. Eine solche Eingabeschnittstelle ermöglicht es also, nicht nur die Art der Kostenrandbedingungen aus einer Tabelle auszuwählen, sondern auch veränderte Kostenrandbedingungen in eine solche Tabelle oder in die Regelvorrichtung einzugeben. Selbstverständlich ist es auch möglich, dass über die Eingabeschnittstelle aktuelle Daten automatisch der Regelvorrichtung zur Verfügung gestellt werden. So ist es denkbar, dass die Eingabeschnittstelle über eine Datenverbindung aus dem Internet die entsprechenden Kostenrandbedingungen tagesaktuell oder sogar stundenaktuell oder in Echtzeit abruft und für die Optimierung mittels eines erfindungsgemäßen Verfahrens verwendet.

Weiter ist es denkbar, dass bei einem erfindungsgemäßen Heizsystem der erste Wärmeerzeuger vorteilhafterweise ein Wärmeerzeuger mit gutem Wirkungsgrad bei niedrigen Vorlauftemperaturen und der zweite Wärmeerzeuger ein Wärmeerzeuger bei gutem. Wirkungsgrad bei hohen Vorlauftemperaturen ist. Es ist also im Rahmen der vorliegenden Erfindung möglich, dass der erste Wärmeerzeuger beispielsweise eine Wärmepumpe und der zweite Wärmeerzeuger beispielsweise ein mit fossilen Brennstoffen befeuertes Heizgerät oder eine elektrische Heizung beinhaltet. Eine solche Kombination ermöglicht es, die jeweiligen Effizienzbereiche sinnvoll auf die Schaltung in Serie der Wärmeerzeuger abzustimmen. Daher kann dies als eine Anordnung bezeichnet werden, bei welcher sich die Effizienzbereiche der beiden Wärmeerzeuger ergänzen. Entscheidend ist, dass der Wärmeerzeuger mit einem Effizienzbereich in einem Temperaturbereich, der höher ist als der Effizienzbereich eines weiteren Wärmeerzeugers, diesem in Serie nachgeschaltet ist. Auf diese Weise kann eine Ausführung eines erfindungsgemäßen Verfahrens zur ausführlich erläuterten Optimierung führen.

Ein weiterer Vorteil ist es, wenn bei einem erfindungsgemäßen Heizsystem vor dem ersten Wärmeerzeuger ein passiver Wärmeerzeuger vorgeschaltet ist, dessen Vorlauftemperatur die eingangsseitige Rücklauftemperatur des ersten Wärmeerzeugers bildet. Ein solcher passiver Wärmeerzeuger kann beispielsweise eine solarthermische Anlage sein, welche Wasser aus dem Rücklauf des Heizsystems vorerwärmt und dem Rücklauf des ersten Wärmeerzeugers zur Verfügung stellt.

Selbstverständlich ist es auch denkbar, dass es sich bei dem passiven Wärmeerzeuger um eine Photovoltaikanlage handelt, deren Strom über eine elektrische Heizeinrichtung, welche ausschließlich mit dem Photovoltaikstrom versorgt wird, zur Verfügung gestellt wird, sodass über diesen elektrischen Heizer ebenfalls eine passive Wärmeerzeugung erfolgt. Die Anordnung vor dem Rücklauf des ersten Wärmeerzeugers ermöglicht es, dass keine zusätzliche Betrachtung durch die Regelvorrichtung erfolgen muss. Vielmehr handelt die Regelvorrichtung nach einem erfindungsgemäßen Verfahren, so wie dies vorstehend beschrieben worden ist, unabhängig davon, ob ein passiver Wärmeerzeuger grundsätzlich vorgesehen ist oder in welchem Betriebsstatus er sich befindet. Dadurch, dass die Rücklauftemperatur des ersten Wärmeerzeugers bestimmt wird, welche wiederum von dem Betriebsstatus des passiven Wärmeerzeugers beeinflusst wird, findet dieser indirekt und damit automatisch Eingang in ein erfindungsgemäßes Optimierungsverfahren.

Auch kann es vorteilhaft sein, wenn bei einem erfindungsgemäßen Heizungs- und gegebenenfalls Warmwasserbereitungssystem für die Bestimmung der Vorlauftemperaturen der beiden Wärmeerzeuger jeweils ein Temperaturfühler und für die Bestimmung der Rücklauftemperatur des ersten Wärmeerzeugers ebenfalls ein Temperaturfühler vorgesehen ist. Die jeweiligen bestimmten Temperaturen werden an die Regelvorrichtung übermittelt. Auch vorteilhaft ist es, wenn zusätzlich ein Temperaturfühler zur Bestimmung der Außentemperatur in den Regelkreis mit eingebaut ist, also die bestimmte Außentemperatur ebenfalls der Regelvorrichtung zur Verfügung gestellt wird. Auf diese Weise kann nicht nur die Optimierung mit Hilfe eines erfindungsgemäßen Verfahrens durchgeführt werden, sondern darüber hinaus auch das Heizsystem selbst überwacht werden.

Die vorliegende Erfindung wird näher erläutert anhand der beigefügten Zeichnungsfiguren. Die dabei verwendeten Begrifflichkeiten "links", "rechts", "oben" und "uten" beziehen sich dabei auf eine Ausrichtung der Figuren mit normal lesbaren Bezugszeichen. Es zeigen:

Fig. 1 eine schematische Darstellung einer ersten Ausführungsform der vorliegenden Erfindung und
Fig. 2 eine schematische Darstellung einer weiteren Ausführungsform der vorliegenden Erfindung

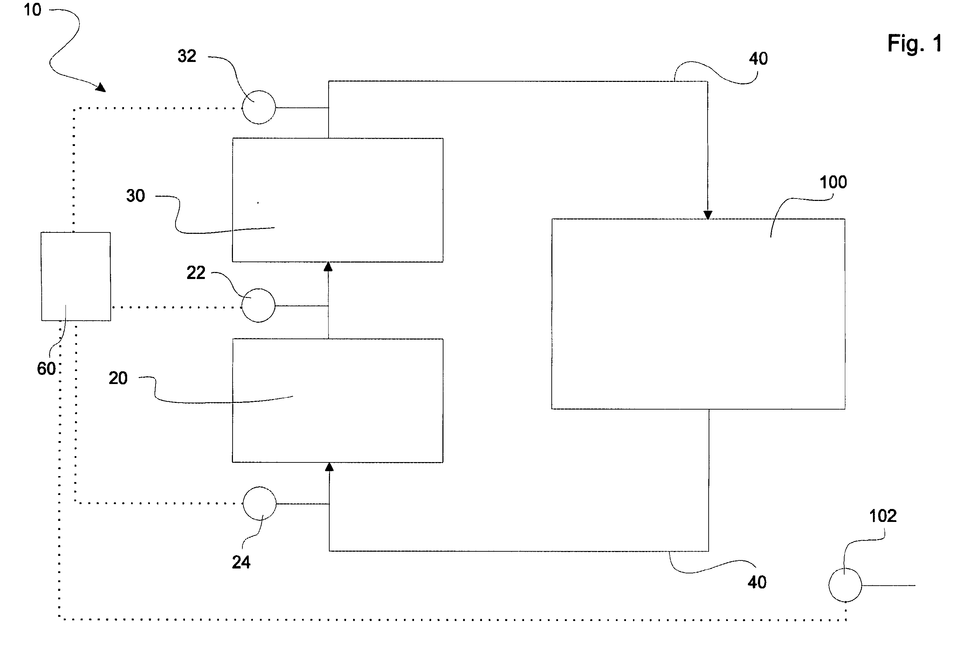

In Fig. 1 ist eine erste Ausführungsform eines erfindungsgemäßen Heizungs- und Warmwasserbereitungssystems 10 dargestellt, welches ein erfindungsgemäßes Verfahren durchführen kann. Ein derartiges Heizungs- und Warmwasserbereitungssystem 10 dient zur Beheizung eines Raumes 100, welcher über einen Heizkreislauf 40 mit Heizfluid versorgt wird. Nicht näher dargestellt in dem Schema der Fig. 1 sind Heizkörper, welche in dem zu beheizenden Raum 100 angeordnet sind, und welche von dem Heizfluid des Heizungs- und Warmwasserbereitungssystems 10 durchflossen werden. Selbstverständlich können auch mehr als ein zu beheizender Raum 100 vorgesehen sein, welcher von einem Heizungs- und Warmwasserbereitungssystem 10 als gemeinsames Heizsystem 10 versorgt wird. Weiterhin kann mindestens ein nicht dargestelltes Warmwasserbereitungssystem integriert sein. Dieses ist hydraulisch parallel zu einem zu beheizenden Raum 100 in den Heizkreislauf 40 geschaltet und wird mit einen hydraulischen Umschalt- oder Mischventil im Wechsel oder parallel zum Raum 100 vom Heizkreislauf 40 durchströmt bzw. beheizt.

Weiter sind in dem Heizungs- und Warmwasserbereitungssystem 10 zwei Wärmeerzeuger 20 und 30 vorgesehen. Ein erster Wärmeerzeuger 20 ist dabei als Niedertemperaturwärmeerzeuger ausgebildet, und beispielsweise durch eine Wärmepumpe ausgeführt. In Serie dem ersten Wärmeerzeuger 20 nachgeschaltet findet sich ein zweiter Wärmeerzeuger 30, der auch als Hochtemperaturwärmeerzeuger bezeichnet werden kann. Dieser ist im vorliegenden Fall zum Beispiel als Heizgerät mit einem Gasbrenner oder Ölbrenner ausgeführt. Auch eine elektrische Heizung, Fernwärme oder ein Durchlauferhitzer sind als zweiter Wärmeerzeuger 30 denkbar.

Aus dem zu beheizenden Raum 100 wird kühles Heizfluid mit Hilfe des Heizkreislaufes 40 in dem Heizungs- und Warmwasserbereitungssystem 10 als Rücklauf dem ersten Wärmeerzeuger 20 zugeführt. Der erste Wärmeerzeuger 20 heizt dieses Heizfluid des Rücklaufs auf seine Vorlauftemperatur des ersten Wärmeerzeugers 20 auf. Durch die Schaltung der beiden Wärmeerzeuger 20 und 30 in Serie stellt der Vorlauf des ersten Wärmeerzeugers 20 gleichzeitig den Rücklauf des zweiten Wärmeerzeugers 30 dar. Der zweite Wärmeerzeuger 30 heizt nun das Heizfluid von der Vorlauftemperatur des ersten Wärmeerzeugers, welcher der Rücklauftemperatur des zweiten Wärmeerzeugers 30 entspricht, auf die gewünschte Vorlauftemperatur des zweiten Wärmeerzeugers und damit auf die Vorlaufsolltemperatur des Heizungs- und Warmwasserbereitungssystems 10 auf.

Mit Hilfe eines erfindungsgemäßen Verfahrens wird bei der Regelung der Betriebsweise des Heizungs- und Warmwasserbereitungssystems 10 die Vorlauftemperatur des ersten Wärmeerzeugers 20 und damit in identischer Weise auch die Rücklauftemperatur des zweiten Wärmeerzeugers 30 verschoben. Das Verschieben dieser Temperatur ermöglicht es für beide Wärmeerzeuger 20 und 30 in Summe die günstigste Betriebsweise zu finden. Hierfür wird eine Berechnung der Gesamtkosten durchgeführt und diese iterativ für eine Vielzahl von Vorlauftemperaturen des ersten Wärmeerzeugers 20 wiederholt. Aus dem Vergleich der errechneten Gesamtkosten für eine Vielzahl von Vorlauftemperaturen wird ein Minimum erkannt, welches als optimale Vorlauftemperatur für den ersten Wärmeerzeuger 20 gesetzt wird. Die Durchführung eines erfindungsgemäßen Verfahrens erfolgt in bestimmten zeitlichen Abschnitten oder aber kontinuierlich, sodass die optimierte Vorlauftemperatur ständig überprüft und wenn notwendig nachgeregelt wird.

Um ein erfindungsgemäßes Verfahren durchzuführen sind im Vorlauf des zweiten Wärmeerzeugers 30 ein Temperaturfühler 32, im Vorlauf des ersten Wärmeerzeugers 20 ein Temperaturfühler 22 und im Rücklauf des ersten Wärmeerzeugers 20 ein Temperaturfühler 24 vorgesehen. Diese drei Temperaturfühler 22, 24 und 32 sind in Fig. 1, über Strichlinien schematisch dargestellt, mit der Regelvorrichtung 60 verbunden. Diese Regelvorrichtung 60 wiederum regelt die einzelnen Wärmeerzeuger 20 und 30, stellt dabei insbesondere die Vorlaufsolltemperatur für den ersten Wärmeerzeuger 20 zur Verfügung. Mit anderen Worten werden die Temperaturfühler 22, 24 und 32 unter anderem dafür verwendet, die Optimierung mit Hilfe eines erfindungsgemäßen Verfahrens in der Regelvorrichtung 60 durchzuführen.

Darüber hinaus kann es sinnvoll sein, in das Optimierungsverfahren eines erfindungsgemäßen Heizungs- und Warmwasserbereitungssystem 10 zusätzlich die aktuelle Außentemperatur mit einfließen zu lassen. Insbesondere bei Luft-Luft-Wärmepumpen oder Luft-Wasser-Wärmepumpen als erster Wärmeerzeuger 20 ist dies für die Effizienz des Betriebs des ersten Wärmeerzeugers 20 von entscheidender Bedeutung. Daher ist bei der Ausführungsform gemäß der Fig. 1 zusätzlich ein Temperaturfühler 102 für die Temperatur der Umgebung des zu beheizenden Raums 100 vorgesehen. Auch dieser übermittelt seine bestimmte Temperatur an die Regelvorrichtung 60, sodass diese bei der Ausführung eines erfindungsgemäßen Verfahrens berücksichtigt werden kann.

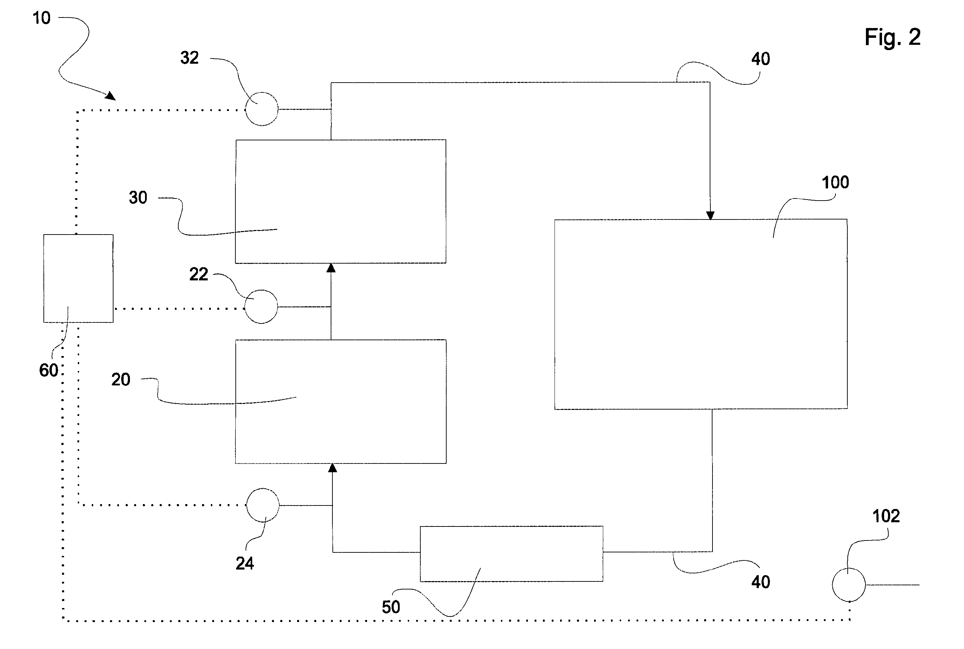

Fig. 2 zeigt eine alternative Ausführungsform eines erfindungsgemäßen Heizungs- und Warmwasserbereitungssystems 10. Diese alternative Ausführungsform ähnelt der Fig. 1 sehr stark, weshalb die identischen Komponenten mit den gleichen Bezugszeichen versehen sind und nicht neu erläutert werden. Vielmehr wird hinsichtlich dieser Komponenten Bezug auf Erläuterungen zu Fig. 1 genommen.

Die Unterschiede dieser alternativen Ausführungsform finden sich in der Anordnung eines passiven Wärmeerzeugers 50. Dieser passive Wärmeerzeuger 50 ist zum Beispiel eine Solaranlage, die entweder als Solarthermieanlage direkt warmes Fluid zur Verfügung stellt, oder aber eine elektrische Heizung, also ein Durchlauferhitzer, mit über eine Photovoltaikanlage erzeugten Strom. Der passive Wärmeerzeuger 50 befindet sich noch vor dem Rücklauf des ersten Wärmeerzeugers 20, sodass die Vorlauftemperatur des passiven Wärmeerzeugers 50 gleichzeitig die Rücklauftemperatur des ersten Wärmeerzeugers 20 darstellt. Da für die Ausführung eines erfindungsgemäßen Verfahrens ausschließlich die Rücklauftemperatur des ersten Wärmeerzeugers 20 Verwendung findet, kann der passive Wärmeerzeuger 50 eingesetzt werden, ohne dass er bewusst in den Regelkreis der Regelvorrichtung 60 mit eingebunden sein muss. Vielmehr wird durch die Veränderung der Rücklauftemperatur des ersten Wärmeerzeugers 20 automatisch der Betriebszustand des passiven Wärmeerzeugers 50 berücksichtigt, sodass die Regelvorrichtung 60 in identischer Weise ein erfindungsgemäßes Verfahren ausführen kann, ohne dass direkt der Status des passiven Wärmeerzeugers 50 bekannt sein muss.

Das Verfahren kann sich auch dadurch auszeichnen, dass zur Berechnung der Gesamtkosten des Betriebs des Heizsystems 10 die folgende Formel verwendet wird:

$$Gesamtkosten = \frac{1}{T_{Vorl\,WE\,2} - T_{R\ddot{u}ckl\,WE\,1}} \left( \frac{T_{Vorl\,WE\,1} - T_{R\ddot{u}ckl\,WE\,1}}{\eta_{WE\,1\,Tvorl/TR\ddot{u}ckl}} \cdot Kostenfaktor_{WE1} \right.$$
$$\left. + \frac{T_{Vorl\,WE\,2} - T_{Vorl\,WE\,1}}{\eta_{WE\,2\,Tvorl/Tvorl}} \cdot Kostenfaktor_{WE2} \right)$$

**Bezugszeichen**

| | |
|---|---|
| 10 | Heizsystem |
| 20 | erster Wärmeerzeuger |
| 22 | Temperaturfühler Vorlauf erster Wärmeerzeuger |
| 24 | Temperaturfühler Rücklauf erster Wärmeerzeuger |
| 30 | zweiter Wärmeerzeuger |
| 32 | Temperaturfühler Vorlauf zweiter Wärmeerzeuger |
| 40 | Heizkreislauf |
| 50 | passiver Wärmeerzeuger |
| 60 | Regelvorrichtung |
| 100 | zu beheizender Raum |
| 102 | Temperaturfühler Umgebung beheizter Raum |

**Patentansprüche**

1.  Verfahren zur optimierten Einstellung einer Heizungsregelung eines Heizungs- und gegebenenfalls eines Warmwasserbereitungssystems (10) mit zwei in Serie geschalteten und regelbaren Wärmeerzeugern (20, 30) für die Beheizung eines Raumes (100) mittels einem Heizkreislauf (40), aufweisend die folgenden Schritte:

    • Vorgeben der gewünschten Heiztemperatur für den Heizkreislauf (40) des zu beheizenden Raumes (100) und gegebenenfalls einer Sollvorlauftemperatur für die Warmwasserbereitung,

• Vorgeben der zu optimierenden Kostenrandbedingungen der beiden Wärmeerzeuger (20, 30),
• Bestimmen der Außentemperatur um den zu beheizenden Raum (100),
• Bestimmen der Rücklauftemperatur vom Heizkreislauf (40) zum ersten der beiden Wärmeerzeuger (20),

**dadurch gekennzeichnet, dass** das Verfahren weiter folgende Schritte aufweist:

• Auswählen einer ersten Vorlauftemperatur für den ersten Wärmeerzeuger (20) zwischen der bestimmten Rücklauftemperatur und der gewünschten Heiztemperatur,
• Berechnen der Gesamtkosten für den Betrieb des Heizsystems (10) mit den vorgegebenen und den bestimmen Werten,
• Iteratives Variieren der Vorlauftemperatur für den ersten Wärmeerzeuger (20) mit jeweils anschließender Berechnung der Gesamtkosten für den Betrieb des Heizsystems (10) mit den vorgegebenen und den bestimmten Werten,
• Vergleich aller iterativ berechneter Gesamtkosten, und
• Vorgeben der Vorlauftemperatur, die zu den geringsten berechneten Gesamtkosten geführt hat, als Sollwert für die Regelung des ersten Wärmeerzeugers (20).

2. Verfahren nach Anspruch 1,
**dadurch gekennzeichnet, dass** es sich bei den Kostenrandbedingungen um Werte handelt, welche aus der folgenden Aufzählung ausgewählt sind:

• Primärenergieverbrauch von jedem der Wärmeerzeuger (20, 30),
• Betriebskosten von jedem der Wärmeerzeuger (20, 30),
• $CO_2$ Ausstoß von jedem der Wärmeerzeuger (20, 30).

3. Verfahren nach den Ansprüchen 1 oder 2,
**dadurch gekennzeichnet, dass** zwischen dem Heizkreislauf (10) und dem ersten Wärmeerzeuger (20) ein passiver Wärmeerzeuger (50) angeordnet ist, und als Rücklauftemperatur zum -ersten Wärmeerzeuger (20) die Vorlauftemperatur des passiven Wärmeerzeugers (50) bestimmt wird.

4. Verfahren nach einem der Ansprüche 1 bis 3,
**dadurch gekennzeichnet, dass** verschiedene zu optimierende Kostenrandbedingungen in einer Tabelle vorgegeben sind und zur Vorgabe der zu optimierenden Kostenrandbedingungen aus dieser Tabelle eine zu optimierende Kostenrandbedingung für das Verfahren ausgewählt wird.

5. Verfahren nach Anspruch 4,
**dadurch gekennzeichnet, dass** zumindest zwei verschiedene Kostenrandbedingungen für das Verfahren ausgewählt werden und die Berechnung der Gesamtkosten des Betriebs des Heizsystems (10) für beide Kostenrandbedingungen durchgeführt wird.

6. Verfahren nach Anspruch 5,
**dadurch gekennzeichnet, dass** für die Regelung des Heizsystems (10) die Vorlauftemperatur für den ersten Wärmeerzeuger (20) ausgewählt wird, welche die prozentual größte Reduktion der Gesamtkosten bezogen auf den jeweils berechneten Maximalwert der Gesamtkosten erzielt.

7. Verfahren nach Anspruch 6,
**dadurch gekennzeichnet, dass** vor der Vorgabe der zu optimierenden Kostenrandbedingungen die aktuelle Ortszeit bestimmt wird und die der bestimmten Ortszeit entsprechende Kostenrandbedingung verwendet wird.

8. Heizungs- und gegebenenfalls Warmwasserbereitungssystem (10) mit zumindest zwei in Serie geschalteten und regelbaren Wärmerzeugern (20, 30) sowie einer Regelvorrichtung (60),
**dadurch gekennzeichnet, dass** die Regelvorrichtung (60) zur Ausführung des Verfahrens mit den Merkmalen eines der Ansprüche 1 bis 7 eingerichtet ist.

9. Heizungs- und gegebenenfalls Warmwasserbereitungssystem (10) nach Anspruch 8, **dadurch gekennzeichnet, dass** die Regelvorrichtung (60) eine Eingabeschnittstelle aufweist, über welche ein Nutzer des Heizsystems die Kostenrandbedingungen eingeben und/oder auswählen kann.

**10.** Heizungs- und gegebenenfalls Warmwasserbereitungssystem (10) nach einem der Ansprüche 8 oder 9, **dadurch gekennzeichnet, dass** es sich bei dem ersten Wärmeerzeuger (20) um einen Wärmeerzeuger mit gutem Wirkungsgrad bei niedrigen Vorlauftemperaturen und bei dem zweiten Wärmeerzeuger (30) um einen Wärmeerzeuger mit gutem Wirkungsgrad bei hohen Vorlauftemperaturen handelt.

**11.** Heizungs- und gegebenenfalls Warmwasserbereitungssystem (10) nach einem der Ansprüche 8 bis 10, **dadurch gekennzeichnet, dass** vor dem ersten Wärmeerzeuger (20) ein passiver Wärmeerzeuger (50) vorgeschaltet ist, dessen Vorlauftemperatur die Rücklauftemperatur des ersten Wärmeerzeugers (20) bildet.

**12.** Heizungs- und gegebenenfalls Warmwasserbereitungssystem (10) nach einem der Ansprüche 8 bis 11, **dadurch gekennzeichnet, dass** für die Bestimmung der Vorlauftemperatur der beiden Wärmeerzeuger (20, 30) jeweils ein Temperaturfühler (22, 32) und für die Bestimmung der Rücklauftemperatur des ersten Wärmerzeugers (20) ein Temperaturfühler (24) vorgesehen sind, welche die jeweils bestimmte Temperatur an die Regelvorrichtung (60) übermitteln.

**Claims**

**1.** Method for the optimized adjustment of a heating control of a heating and possibly hot-water preparing system (10) with two serially connected and controllable heat generators (20, 30) for heating a space (100) by means of a heating circuit (40), comprising the following steps:

- specifying the desired heating temperature for the heating circuit (40) of the heating space (100) to be heated and possibly a setpoint flow temperature for the preparation of hot water,
- specifying the cost boundary conditions to be optimized of the two heat generators (20, 30),
- determining the outside temperature around the space (100) to be heated,
- determining the return temperature from the heating circuit (40) to the first of the two heat generators (20),

**characterized in that** the method further comprises the following steps:

- selecting a first flow temperature for the first heat generator (20) between the determined return temperature and the desired heating temperature,
- calculating the total costs for operating the heating system (10) with the values specified and determined,
- iteratively varying the flow temperature for the first heat generator (20) with subsequent calculation in each case of the total costs for operating the heating system (10) with the values specified and determined,
- comparing all of the iteratively calculated total costs, and
- specifying the flow temperature that led to the lowest calculated total costs as a setpoint value for the control of the first heat generator (20).

**2.** Method according to Claim 1,
**characterized in that** the cost boundary conditions are values that are selected from the following enumeration:

- primary energy consumption of each of the heat generators (20, 30),
- operating costs of each of the generators (20, 30,
- $CO_2$ emission of each of the heat generators (20, 30).

**3.** Method according to either of Claims 1 and 2, **characterized in that** a passive heat generator (50) is arranged between the heating circuit (10) and the first heat generator (20), and the flow temperature of the passive heat generator (50) is determined as the return temperature to the first heat generator (20).

**4.** Method according to one of Claims 1 to 3, **characterized in that** various cost boundary conditions to be optimized are specified in a table and, to specify the cost boundary conditions to be optimized, a cost boundary condition to be optimized is selected for the method from this table.

**5.** Method according to Claim 4,
**characterized in that** at least two different cost boundary conditions are selected for the method and the calculation of the total costs of operating the heating system (10) is carried out for both cost boundary conditions.

**6.** Method according to Claim 5,
**characterized in that** the flow temperature for the first heat generator (20) that achieves the greatest reduction in the total costs as a percentage of the respectively calculated maximum value of the total costs is selected for the control of the heating system (10).

**7.** Method according to Claim 6,
**characterized in that**, before specifying the cost boundary conditions to be optimized, the current local time is determined and the cost boundary condition corresponding to the local time determined is used.

**8.** Heating and possibly hot-water preparing system (10) with at least two serially connected and controllable heat generators (20, 30) and a control device (60),
**characterized in that** the control device (60) is designed for performing the method with the features of one of Claims 1 to 7.

**9.** Heating and possibly hot-water preparing system (10) according to Claim 8,
**characterized in that** the control device (60) has an input interface, by way of which a user of the heating system can input and/or select the cost boundary conditions.

**10.** Heating and possibly hot-water preparing system (10) according to either of Claims 8 and 9, **characterized in that** the first heat generator (20) is a heat generator with good efficiency at low flow temperatures and the second heat generator (30) is a heat generator with good efficiency at high flow temperatures.

**11.** Heating and possibly hot-water preparing system (10) according to one of Claims 8 to 10, **characterized in that** a passive heat generator (50) of which the flow temperature forms the return temperature of the first heat generator (20) is connected upstream of the first heat generator (20).

**12.** Heating and possibly hot-water preparing system (10) according to one of Claims 8 to 11, **characterized in that** a temperature sensor (22, 32) is respectively provided for the determination of the flow temperature of the two heat generators (20, 30) and a temperature sensor (24) is provided for the determination of the return temperature of the first heat generator (20), which temperature sensors transmit the respectively determined temperature to the control device (60).

**Revendications**

**1.** Procédé de réglage optimisé d'un système (10) de chauffage et éventuellement de préparation d'eau chaude présentant deux producteurs de chaleur (20, 30) raccordés en série, régulables et permettant le chauffage d'un local (100) au moyen d'un circuit de chauffage (40), le procédé présentant les étapes suivantes :

- définition de la température de chauffage souhaitée pour le circuit de chauffage (40) du local (100) à chauffer et éventuellement d'une température de consigne pour le départ de la préparation d'eau chaude,
- définition des conditions de coût à optimiser pour les deux producteurs de chaleur (20, 30),
- détermination de la température régnant à l'extérieur du local (100) à chauffer,
- détermination de la température du circuit de chauffage (40) au retour dans le premier (20) des deux producteurs de chaleur,

**caractérisé en ce que** le procédé présente en outre les étapes suivantes :

- sélection d'une première température de départ du premier producteur de chaleur (20), située entre la température de retour déterminée et la température de chauffage souhaitée,
- calcul du coût total du fonctionnement du système de chauffage (10) pour les valeurs définies et les valeurs déterminées,
- modification itérative de la température de départ du premier producteur de chaleur (20), avec ensuite chaque fois calcul du coût total du fonctionnement du système de chauffage (10) pour les valeurs définies et les valeurs déterminées,
- comparaison de tous les coûts totaux calculés itérativement et
- définition de la température de départ qui a conduit au coût total le plus bas en tant que valeur de consigne de la régulation du premier producteur de chaleur (20).

**2.** Procédé selon la revendication 1, **caractérisé en ce que** les conditions de coût sont des valeurs sélectionnées dans la liste ci-dessous :

- consommation en énergie primaire de chacun des producteurs de chaleur (20, 30),
- coût de fonctionnement de chacun des producteurs de chaleur (20, 30) et
- dégagement de $CO_2$ par de chacun des producteurs de chaleur (20, 30).

**3.** Procédé selon les revendications 1 ou 2, **caractérisé en ce qu'**un producteur de chaleur passif (50) est disposé entre le circuit de chauffage (10) et le premier producteur de chaleur (20) et **en ce que** la température déterminée sur le départ du producteur de chaleur passif (50) est la température de retour du premier producteur de chaleur (20).

**4.** Procédé selon l'une des revendications 1 à 3, **caractérisé en ce que** différentes conditions de coût à optimiser sont définies dans un tableau et **en ce que** pour définir les conditions de coût à optimiser, une condition de coût à optimiser pour le procédé est sélectionnée dans le tableau.

**5.** Procédé selon la revendication 4, **caractérisé en ce qu'**au moins deux conditions de coût différentes sont sélectionnes pour le procédé et **en ce que** le calcul du coût total du système de chauffage (10) est exécuté pour les deux conditions de coût.

**6.** Procédé selon la revendication 5, **caractérisé en ce que** pour la régulation du système de chauffage (10), la température de départ qui permet d'obtenir le plus fort pourcentage de réduction du coût total par rapport à la valeur maximale respective calculée est sélectionnée pour le premier producteur de chaleur (20).

**7.** Procédé selon la revendication 6, **caractérisé en ce qu'**avant la définition des conditions à optimiser, l'heure locale effective est déterminée et la condition à optimiser qui correspond à l'heure locale déterminée est utilisée.

**8.** Système (10) de chauffage et éventuellement de préparation d'eau chaude présentant deux producteurs de chaleur (20, 30) raccordés en série et régulables ainsi qu'un ensemble de régulation (60),
**caractérisé en ce que**
l'ensemble de régulation (60) est conçu pour mettre en oeuvre le procédé qui présente les caractéristiques de l'une des revendications 1 à 7.

**9.** Système (10) de chauffage et éventuellement de préparation d'eau chaude selon la revendication 8, **caractérisé en ce que** l'ensemble de régulation (60) présente une interface d'entrée par laquelle un utilisateur du système de chauffage peut introduire et/ou sélectionner des conditions de coût.

**10.** Système (10) de chauffage et éventuellement de préparation d'eau chaude selon l'une des revendications 8 ou 9, **caractérisé en ce que** le premier producteur de chaleur (20) est un producteur de chaleur présentant un bon rendement à basse température de départ et le deuxième producteur de chaleur (30) un producteur de chaleur présentant un bon rendement à haute température de départ.

**11.** Système (10) de chauffage et éventuellement de préparation d'eau chaude selon l'une des revendications 8 à 10, **caractérisé en ce qu'**un producteur de chaleur passif (50) dont la température de départ est la température de retour du premier producteur de chaleur (20) est raccordé en amont du premier producteur de chaleur (20).

**12.** Système (10) de chauffage et éventuellement de préparation d'eau chaude selon l'une des revendications 8 à 11, **caractérisé en ce que** des sondes de température (22, 32) sont prévues pour la détermination de la température de départ des deux producteurs de chaleur (20, 30) et une sonde de température (24) est prévue pour la détermination de la température de retour du premier producteur de chaleur (20), ces sondes transmettant à l'ensemble de régulation (60) la température qu'elles ont déterminée.

Fig. 1

EP 2 655 980 B1

Fig. 2

EP 2 655 980 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2159495 A1